# EUROPEAN PATENT SPECIFICATION

(11) **EP 1 263 245 B1**
(45) Date of publication and mention of the grant of the patent: **23.08.2006**
(21) Application number: 02009325.8
(22) Date of filing: 02.05.2002
(51) Int. Cl.: H04Q 3/00

(54) **Hot-lineservice in a multimedia network**
Hot-linedienst in einem Multimedianetzwerk
Service hot-line dans un réseau multimédia

(30) Priority: 31.05.2001 US 871514
(43) Date of publication of application: 04.12.2002
(73) Proprietor: ALCATEL, 75008 Paris (FR)
(72) Inventor: Mani, Babu V., Plano, Texas 75025 (US)
(74) Representative: Rausch, Gabriele

(56) References cited:
- EP-A- 0 936 796
- US-B1- 6 222 826

## Description

### BACKGROUND OF THE INVENTION

### Technical Field of the Invention

The present invention generally relates to telecommunication and data communication services. More particularly, and not by way of any limitation, the present invention is directed to a direct connect or "hot line" service in a multimedia-capable next-generation network.

### Description of Related Art

Over the last two decades or so, telecommunication services have evolved rapidly from simple telephone calls and fax communications to a host of advanced services such as multi-party conferences, voice mail, call forwarding, caller ID, call waiting, et cetera. This rapid evolution has been made possible primarily due to the successful deployment of the Intelligent Network (IN) and Advanced IN (AIN) architecture using Signaling System No. 7 (SS7) as the out-of-band signaling protocol infrastructure. Similarly, data services have also followed a significant transformation from basic text messaging in the 1980s to the World Wide Web and Internet of today, where transporting diverse media has become commonplace. For example, bandwidth-intensive services such as desktop video conferencing, video on demand, telemedicine, real-time audio, and many other applications are driving the demand for simultaneous support of different types of services on the same public network.

Coupled with the phenomenal popularity of the Internet, recently there has been a tremendous interest in using the packet-switched network (PSN) infrastructure employed in the data networks (e.g., those based on Internet Protocol (IP) addressing) as a replacement for, and/or as an adjunct to, the existing circuit-switched network (CSN) infrastructure deployed in today's voice networks. Several advantages are expected to be realized due to such integration. From network operators' viewpoint, the inherent traffic aggregation in PSN allows for a reduction in the cost of transmission and the infrastructure cost per end-user. Ultimately, such cost reductions enable the network operators to pass on the savings to subscribers or, more generally, users. Also, operators of a new breed of service-centric networks (referred to as next-generation networks, distinct from the existing voice-centric and data-centric networks) can offer enhanced services with integrated voice/data/video to users who will be using endpoints of diverse multimedia capabilities.

As alluded to hereinabove, several advances have taken place in both data and voice services. However, the current data-centric and voice-centric services do not provide the gamut of enhancements that are possible with the use of multimedia capabilities in a next-generation network.

Another example may be found in EP 936796.

### SUMMARY OF THE INVENTION

Accordingly, the present invention advantageously provides an enhanced direct connect service in a multimedia-capable network wherein a subscriber is operable to effectuate a "hot line" or a "warm line" connection to one or more authorized destinations in different media, including audio, video, and data communications. Preferably, the multimedia-capable network is provisioned as a next-generation network having a decoupled service architecture that is facilitated by the use of multimedia softswitch technology.

In one aspect, the present invention is directed to a system and method for establishing a direct connection through a multimedia-capable service network. Upon receiving at a network element serving a subscriber an indication to initiate a direct connect session involving the subscriber, a multimedia call engine is invoked to launch a call treatment application for the subscriber. If a destination is not specified in a programmable delay mode (i.e., warm line mode) with respect to the direct connection, a default destination is determined by the network. Further, a service profile associated with the subscriber is queried to determine applicable service options with respect to an authorized destination. A one-way or two-way direct connect session to the appropriate destination or destinations is commenced thereafter based on at least a portion of the relevant service profile options, including various scheduling conditions. In a delivery mode, pictures, video, audio, or data stream can be delivered to predefined destinations. Similarly, one or more media may be captured from the authorized destinations in a capture mode.

Depending on how the service architecture is implemented, the call treatment application may be provisioned as a service application hosted on a third-party server platform coupled to a public packet-switched network (e.g., the Internet), as a telecom-hardened, carrier-class service application hosted on dedicated IN/AIN-compliant nodes such as multimedia Service Control Points (SCPs) and application servers, or as a centralized service with service logic embedded in SS7 nodes (e.g., Service Switching Points or SSPs) and multimedia softswtich elements.

In another aspect, the present invention is directed to a computer-accessible medium operable with at least a network element disposed in a multimedia-capable next-generation network. The computer-accessible medium is further operable to carry a sequence of instructions which, when executed by at least one processing entity associated with the network, causes to be performed at least a portion of the steps of the multimedia-capable direct connect service set forth hereinabove.

### BRIEF DESCRIPTION OF THE DRAWINGS

A more complete understanding of the present invention may be had by reference to the following Detailed Description when taken in conjunction with the accompanying drawings wherein:
FIG. 1 depicts an exemplary high-level architectural scheme of a next-generation, multimedia-capable network employed for practicing the teachings of the present invention;
FIG. 2 depicts a functional block diagram associated with the exemplary high-level architectural scheme shown in FIG. 1;
FIG. 3 depicts a functional block diagram of a multimedia call/session engine operable in accordance with the teachings of the present invention;
FIG. 4 depicts an exemplary next-generation network capable of multimedia services;
FIG. 5 depicts an exemplary service network which employs a system and method for establishing a multimedia-capable direct connect session in accordance with the teachings of the present invention;
FIG. 6 depicts an exemplary multimedia interface with browser navigation for effectuating multimedia calls and direct connect sessions in accordance with the teachings of the present invention;
FIG. 7 depicts an exemplary embodiment of a subscriber's direct connect service profile;
FIG. 8A is a flow chart of the steps involved in an exemplary embodiment of the direct connect method of the present invention;
FIG. 8B is a flow chart of the steps involved in another exemplary embodiment of the direct connect method of the present invention; and
FIG. 8C is a flow chart of the steps involved in yet another exemplary embodiment of the direct connect method of the present invention.

### DETAILED DESCRIPTION OF THE DRAWINGS

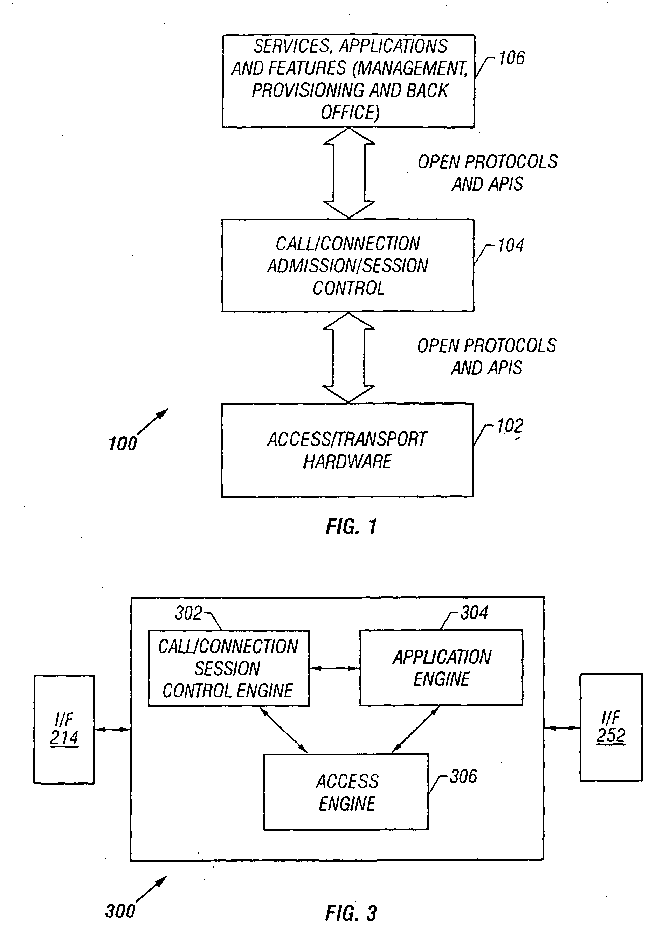

In the drawings, like or similar elements are designated with identical reference numerals throughout the several views thereof, and the various elements depicted are not necessarily drawn to scale. Referring now to FIG. 1, depicted therein is an exemplary high-level architectural scheme 100 of a next-generation network that is capable of effectuating multimedia communications. In the context of the present patent application, the term "multimedia" broadly refers to visual information, aural information, and other information. Visual information is generally divided into two categories: (i) still pictures and graphics, and (ii) full-motion video or animation. Aural information includes both speech and non-speech categories. Other information categories can include text, computer data, etc. Multimedia communication involves, accordingly, integrated presentation of text, graphics, video, animation, sound, and the like, using different media and multiple information elements in a single application or session.

The exemplary architectural scheme 100 of the next-generation network is preferably effectuated by implementing what is known as softswitch technology. Essentially, the softswitch functionality is operable to separate the call control functions of a call (or, "session control" functions in the context of a multimedia communication session) from the media gateways (i.e., transport layer(s)) that carry it. Call control features can vary, but call routing, admission control, connection control (such as creating and tearing down sessions), and signaling interworking -- such as from SS7 to Session Initiation Protocol (SIP) -- are usually included. These functionalities may collectively be referred to as session control. The softswitch functionality can also include: (i) the ability to route a call based on customer database information, (ii) the ability to transfer control of the call to a node disposed in another network, and (iii) support of management functions such as provisioning, billing, etc.

Continuing to refer to FIG. 1, the architectural scheme 100 accordingly includes an access/transport level 102 which interacts with a session control level 104 via a plurality of open-standard protocols and application programming interfaces (APIs). The session control level 104 is operable, in turn, to interface with an application services/features level 106 via a second set of open-standard protocols and APIs. As will be described in greater detail hereinbelow, various multimedia services, applications, and features may be provided as part of this services level 106. Also, some of the back office management and provisioning functionality can be included herewith.

Those skilled in the art should readily appreciate that several protocols and APIs are available for effectuating the architectural scheme 100 set forth hereinabove, which effectively decouples the session control layer from the underlying access/transport layer as well as the service application layer. For example, these protocols -- which effectuate media control APIs, signaling APIs, and service APIs -- include: SIP, H.323, Call Processing Language (CPL), Media Gateway Controller Protocol (MGCP), Internet Protocol Device Control (IPDC), H.248, MEGACO, Real-Time Protocol (RTP), Java™ APIs for Integrated Networks (JAIN), Resource Reservation Protocol (RSVP), Parlay, Lightweight Directory Access Protocol (LDAP), Markup Languages such as Extensible Markup Language (XML), Multi Protocol Label Switching (MPLS), and the like. Additionally, access to the existing IN/AIN service architecture is also available via suitable SS7 or IP-based interfaces.

The softswitch functionality is realized essentially as a software implementation that can reside on a single network element, or be distributed across multiple nodes. Also, different levels of decoupling and interfacing may be provided in an actual softswitch implementation. For example, SS7 functionality may be embedded within a softswitch element or kept separate. In other implementations, the softswitch functionality may sit on top of a media gateway (MGW), instead of being physically distinct, as long as transport and control planes are decoupled.

By creating separate planes for control and switching and leveraging software's programmability, service providers can combine transport services and control protocols freely in order to facilitate seamless migration from one service to another. Best-in-class solutions and products from multiple vendors can be advantageously deployed in the next-generation network because of open standards and APIs. Further, open APIs to the service layer (including a suitable service creation environment (SCE)), along with service creation, service mediation and service brokering standards, enable creation of numerous advanced, multimedia-enhanced services with faster service rollout.

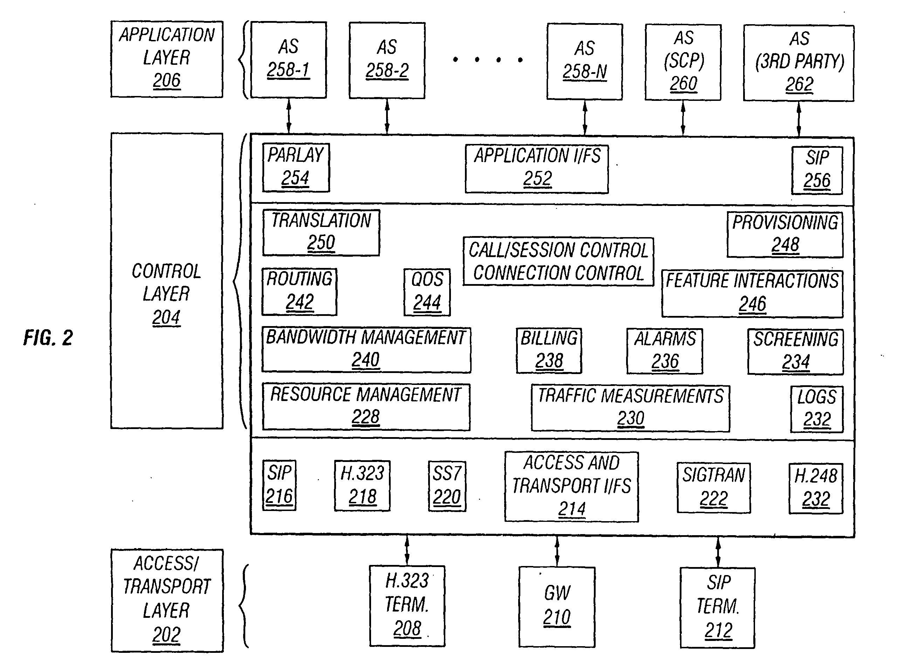

FIG. 2 depicts a functional block diagram associated with the exemplary architectural scheme shown in FIG. 1. Three layers corresponding to the three decoupled levels of the architectural scheme are particularly illustrated. An access/transport layer 202 is exemplified with a plurality of multimedia-capable H.323 terminals 208, GWs 210 (including MGWs and Access Gateways or AGWs) for providing access to one or more Integrated Access Devices (IADs) (not shown) and other communication appliances, and multimedia-capable SIP terminals 212. For purposes of the present invention, all such multimedia-capable access devices (including multimedia-capable phones, computers, game stations, television sets, etc.) may be referred to as multimedia appliances and are preferably provided with one or more man/machine interfaces (e.g., video/still cameras, microphones, display screens, keyboards, pointing devices, joy sticks, track balls, voice recorders, audio-to-text or text-to-audio converters, and the like) for accepting or capturing multimedia responses or inputs associated with a user. Also, in some exemplary implementations, the multimedia appliances may be equipped with suitable biometric ID readers and sensors, e.g., fingerprint readers, retinal scanners, voice recognition systems, etc.

Continuing to refer to FIG. 2, control layer 204 of the decoupled architectural scheme illustrates the functionality of an exemplary multimedia call/session engine implemented as part of a multimedia softswitch in a network. A call/session and connection control block 226 is provided with a plurality of access and transport interfaces 214 to couple to the underlying access/transport layer 202. As alluded to hereinabove, these interfaces include, e.g., SIP interfaces 216, H.323 interfaces 218, SS7 interfaces 220, SigTran interfaces 222 (for SS7-over-IP) and H.248 interfaces 224. The functionality of the call/session and connection control block 226 is associated with a plurality of modules such as, for instance, a resource management module 228, a traffic metering/measurement module 230, an event log module 232, a screening module 234, alarms 236, a billing module 238, a bandwidth management module 240, a routing module 242, a Quality of Service (QoS) module 244, feature interactions module 246, a provisioning module 248, and a translation module 250.

A plurality of application interfaces 252 are available to the multimedia session engine for interacting with an application layer 206. A Parlay interface 254 and a SIP interface 256 are exemplified herein. Reference numerals 258-1 through 258-N refer to a plurality of application servers (ASs) that are operable to host various services, features and management policies. One or more legacy service nodes (e.g., a Service Control Point or SCP) may also be provided as part of the application layer 206 in the form of one or several AS nodes, e.g., AS 260. Preferably, interfaces to third-party AS nodes 262 are also included.

Application layering in the decoupled architectural scheme can be architected in three ways. Custom applications such as e-commerce, e-business, e-residence (home appliance control, residential security, etc.), e-health, and the like, may reside on the Internet as applications hosted on third-party platforms. ' Specialized services such as Virtual Private Networks (VPNs), prepaid services, etc., and multimedia applications for business and residential use may be provided as distributed applications hosted on dedicated telecom-hardened platforms. Carrier-class AS nodes, multimedia-capable SCPs, etc. typically comprise such platforms. A select group of legacy service offerings, for commercial as well as residential applications, may be provided as centralized applications that are based on SS7 platforms (such as signal switching points (SSPs)) and softswitch nodes.

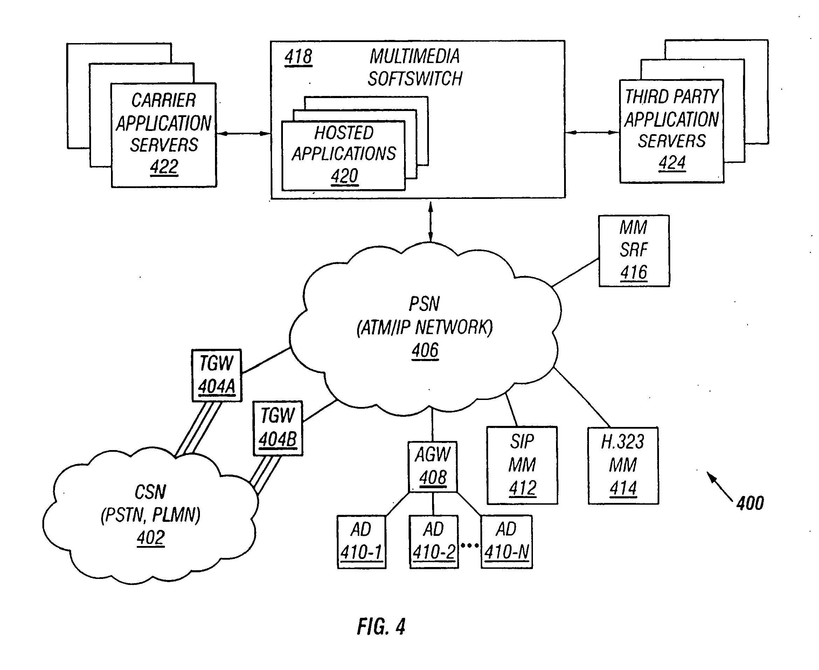

Referring now to FIG. 3, depicted therein is a high-level functional block diagram of a call/session engine 300 of a multimedia softswitch operable in accordance with the teachings of the present invention. As described in detail hereinabove, both access/transport interfaces 214 and application layer interfaces 252 are available to the call/session engine 300 for effectuating its softswitch functionality. A control engine 302 is responsible for call/session control and connection control (analogous to the traditional call control function or CCF). An application engine 304 is included for application triggering and managing feature/policy interaction with respect to a triggered service application. In addition, the application engine 304 is preferably operable to open suitable APIs for supporting enhanced services. When third-party applications are invoked, the application engine 304 may also provide firewall management and subscriber access management for service selection and initiation. An access engine 306 is operable to effectuate online user authentication and authorization and validate service usage rights. Also, roaming management may be provided by the access engine 306 for subscription retrieval, roaming retrieval and registration negotiation.

FIG. 4 depicts an exemplary next-generation multimedia network 400 that is capable of providing a plurality of multimedia services in accordance with the teachings of the present invention. For purposes of the present invention, network 400 and its variants and exemplary implementations will be referred to as a "service network." One or more legacy circuit-switched networks (CSNs) 402 such as the Public Switched Telephone Network (PSTN) for wireline telephony and the Public Land Mobile Network (PLMN) for wireless telephony are coupled to one or more packet-switched networks (PSNs) 406 such as the IP-based Internet, ATM-based packet network, etc. Further, the PSN portion 406 may also encompass such other private IP-based networks as, e.g., corporate intranets, enterprise networks, home networks, and the like. Accordingly, in one embodiment, PSN 406 represents an inter-networking network of a combination of such IP networks. A plurality of Trunk Gateways (TGWs), e.g., TGW 404A and TGW 404B, are disposed between the CSN and PSN portions of the network 400 for effectuating the interfacing therebetween. An Access Gateway (AGW) node 408 is coupled to the PSN portion 406 for facilitating access to the network from a plurality of access devices (ADs) 410-1 through 410-N. One or more multimedia-capable SIP terminals 412 and multimedia-capable H.323 terminals 414 are operable to originate and terminate multimedia sessions in conjunction with various multimedia services supported by the network 400.

One or more optional multimedia (MM) Service Resource Function (SRF) nodes, e.g., MM-SRF 416, are coupled to PSN 400 for providing bearer resource functionality for converged voice/data services, protocols to request these services, and open APIs for programming bearer-resource-intensive applications as well as content/announcement files. The MM-SRF node 416 does not set up a bearer path between two parties, however, as there is no such dedicated bearer connection in the context of IP networking. Rather, only a logical connection is established between the parties.

Within the multimedia-based service network framework, some of the functions of the MM-SRF node 416 include the following: (i) operating in the media access/resources plane for bearer services by providing multimedia resource services, (ii) providing standard protocols, (iii) interfacing to AS nodes through a multimedia softswitch (e.g., softswitch 418), and (iv) enabling third-party programmability of bearer services and content/announcements through the open APIs. Those skilled in the art should appreciate that some of these functionalities may be embedded within the multimedia softswitch 418 or be distributed across several MM-capable nodes depending on the integration level of the softswitch.

A plurality of hosted applications 420 are co-located at the multimedia softswitch node 418. The specific type of the applications is dependent on the service architecture implementation and application layering. Some of the exemplary applications may include network announcements (in conjunction with SRF 416), video conferencing, digit collection, unified (multimedia) messaging, media streaming and custom announcements, automatic speech recognition (ASR), text-to-speech (TTS), user verification using multimedia, and various enhanced services such as multimedia call waiting, direct connect services, distinctive call notification, emergency override service, presentation of call party profiles based on multimedia, etc. It should be recognized, in addition, that some of these multimedia services may be provisioned as applications hosted on carrier AS nodes 422 and third-party AS nodes 424, with suitable APIs associated therewith, respectively.

Although the exemplary network embodiment 400 shown in FIG. 4 does not explicitly illustrate SS7 interfaces for effectuating legacy IN/AIN services, those skilled in the art should appreciate that various such SS7 interfaces and SS7-capable signaling gateways (SGWs) may also be appropriately disposed in the network for providing SS7 functionality.

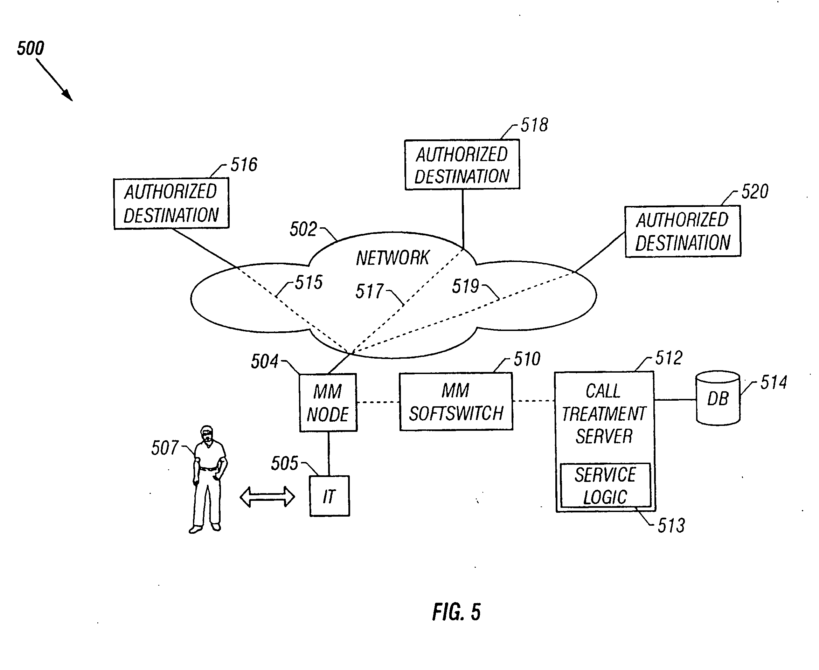

Referring now to FIG. 5, depicted therein is an exemplary service network arrangement 500 which employs a system and method for establishing a direct connect session in a multimedia-capable next-generation network 502 in accordance with the teachings of the present invention. It should be appreciated by those skilled in the art upon reference hereto that in one embodiment, the network 502 may be comprised of a combination of various PSN and CSN portions and their hybrids, including local and inter-carrier network portions. A multimedia node or network element 504 is operable to serve a plurality of subscribers, e.g., subscriber 507 operating a multimedia-based intelligent terminal (IT) or independent access device (IAD) 505 for originating/terminating calls and for establishing one or more direct connect sessions with respect to select authorized destinations as will be described hereinbelow. A softswitch 510 having the multimedia call/session engine functionality as described hereinabove is disposed in the network 502 for call routing and application triggering. Although the softswitch 510 is illustrated as a separate node in this embodiment, it should be recognized that the softswitch functionality may also be provided as part of the serving multimedia node 504. A call treatment server 512 is provided as an application server node coupled to the network 502, wherein suitable multimedia service logic 513 is provided for querying a subscriber direct connect service profile database. Again, as alluded to hereinabove, it should be apparent that the functionality of the call treatment server node 512 may be distributed or embedded, depending upon the service architecture and application layering.

Continuing to refer to FIG. 5, the direct connect system of the present invention includes a database environment 514 associated with the call treatment server node 512 via a suitable interface. Various direct connect modes, authorized destinations, delivery/capture options, restrictions and policies, other related features such as intelligent control options, and the like are stored in the database environment 514. In a presently preferred exemplary embodiment of the present invention, the database environment 514 is capable of being updated by the subscribers as well as the network operator.

Reference numerals 516, 518 and 520 refer to a plurality of authorized destinations operable to be directly connected to the subscriber 507 via direct connect sessions 515, 517 and 519, respectively. In accordance with the teachings of the present invention, the authorized destinations can comprise governmental entities such as public safety agencies (e.g., police stations, fire departments, etc.), commercial entities (e.g., nursing homes, daycare and elder care centers, hospitals, etc.), or select individual parties such as designated family members, friends, and the like. The direct connect sessions to the authorized destinations may be effectuated in a "hot line" connect mode (where there is no delay) or a "delayed hot line" (i.e., "warm line") mode where a programmable delay allows a select destination to be specified during call/session setup. If no destination is specified during the setup in the warm line mode, a default destination is selected based on the subscriber's direct connect service profile.

Regardless of whether hot line or warm line connectivity is established, direct connect sessions 515, 517 and 519 may be effectuated in accordance with one or more of the numerous service options available or applicable with respect to the subscriber's direct connect service profile. As will be described in greater detail hereinbelow regarding an exemplary embodiment of the service profile, at least some of the various options may preferably provided to be interactive with, and dependent upon, other direct connect service options.

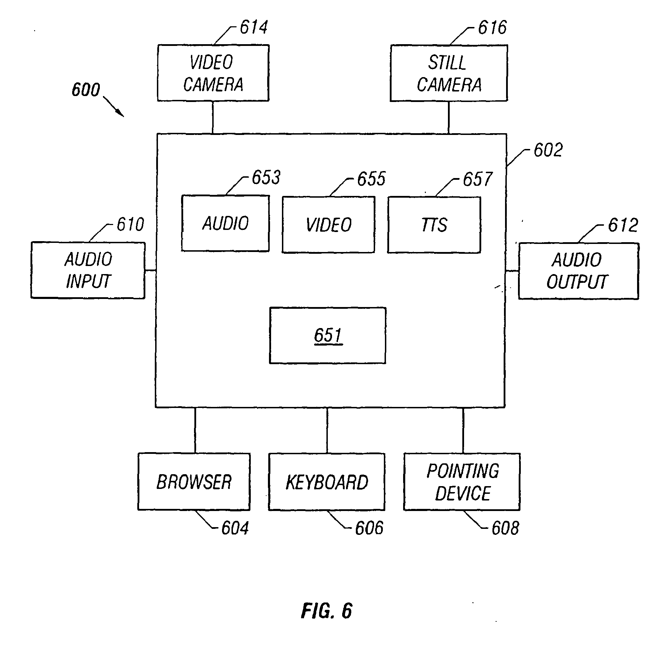

FIG. 6 depicts an exemplary multimedia interface 600 with browser navigation capability that is operable with multimedia-capable terminals for effectuating multimedia calls and direct connect sessions in accordance with the teachings of the present invention. A display 602 is operable to present a graphic user interface (GUI) with a plurality of call-oriented icons which can be activated via drag-and-drop interaction under the control of a browser client 604 running on a multimedia terminal, e.g., IT 505 depicted in FIG. 5. At least a portion (e.g, portion 651) of the display 602 may be utilized for presenting video/photo indicia relative to the party or destination with which the subscriber is in a direct connect session. Additionally, the portion 651 or other display portions may be utilized for presenting other icons or windows with respect to additional multimedia services that the subscriber may have. A keyboard or keypad 606 and a cursor pointing device 608 (such as, e.g., a mouse or trackball, and their equivalents) are provided for facilitating the drag-and-drop interaction between the subscriber and the interface. Suitable audio input devices 610 and audio output devices 612 are associated with the interface 600 for effectuating live speech responses and/or for monitoring audio channels associated with a direct connect session. A digital video camera 614 and a still camera 616 are also included for capturing live video and still photographs of the subscriber in order to provide live images as multimedia responses to a call party engaged in a direct connect session with the subscriber.

If call waiting (CW) notification features are available to the subscriber, a plurality of waiting callers may be presented on the display 602 as suitable "icons" (not shown in this FIG.). It should be recognized that these icons may comprise audio clip icons, image icons, animation graphics, flashing text messages, et cetera, associated with the waiting callers. Further, the display 602 can include additional icons relating to selected call party profile presentation modes if the subscriber has such service capabilities. Additional information regarding such service features is provided in one or more of the commonly owned, co-pending U.S. patent applications cross-referenced hereinabove.

The exemplary multimedia interface 600 also includes a plurality of call modes for effectuating different types of multimedia calls between the subscriber and other parties. An Audio icon 653 is operable to indicate a voice-only mode. Similarly, a Video icon 655 indicates a video-capable call mode that includes audio. A TTS icon 657 is operable, when activated, to convert text messages to speech and vice versa. In addition, icons relating to selective call diversion, call transfer, call rejection, and call acceptance may also be provided so as to enable the subscriber to select different call treatments and/or to divert an incoming call to a voice mail box, answering service, or a different terminal, etc.

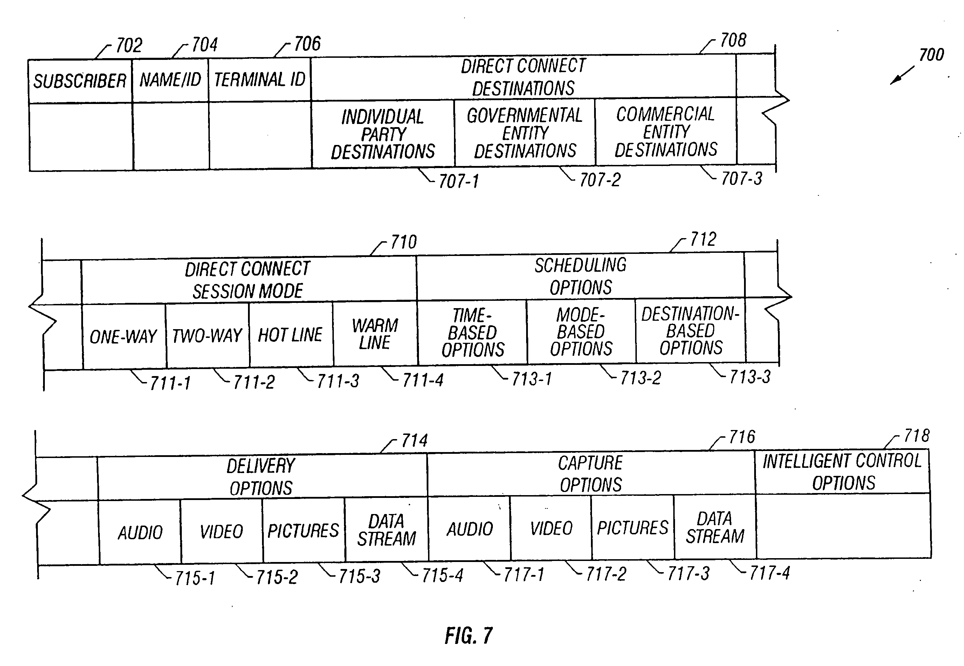

Referring now to FIG. 7, depicted therein is an exemplary embodiment of a service profile 700 for a subscriber 702 operable with respect to the direct connect service of the present invention. It should be apparent that in addition to the subscriber profiles such as the direct connect service profile 700, the database environment 514 (shown in FIG. 5) may also be populated with further service features, options and policies relating to other multimedia-enhanced services, e.g., call party profile presentation, multiple call waiting, distinctive call notification, emergency notification features, and the like. In addition, whereas a single subscriber's profile record is exemplified herein, those skilled in the art will recognize that the applicable database environment is typically comprised of numerous such records operable with respect to a plurality of subscribers.

Preferably, the subscriber 702 may be identified as being associated with a terminal/station by way of a name or other ID 704. A terminal ID 706 (e.g., a directory number, email ID, an Internet address such as a URL, etc.) is included to identify the terminal/station associated with the subscriber. In accordance with the teachings of the present invention, a plurality of authorized direct connect destinations 708 are specified for the subscriber. As alluded to hereinabove, these authorized destinations 708 may include individual party destinations 707-1, governmental agency/entity destinations 707-2, and commercial entity destinations 707-3. Appropriate destination or destinations are selected either in a default condition (e.g., when a destination is not supplied during call setup in the warm line mode), by specifying in call setup requests, via intelligent resolution of the various direct connect service features, options, and policies, or as a result of intelligent control based on monitoring audio, video and/or data stream channels associated with the subscriber's multimedia device.

In a presently preferred exemplary embodiment of the present invention, a plurality of direct connect session modes 710 may also be specified as part of the subscriber's service profile 700. In addition to the hot line and warm line modes (reference numerals 711-3 and 711-4) alluded to hereinabove, a one-way mode 711-1 involves a unidirectional communication path between the subscriber and the selected destination, wherein transmission of information may be from the subscriber to the destination (i.e., delivery mode) or from the destination to the subscriber (i.e., capture mode). In similar fashion, a two-way mode 711-2 involves a bidirectional communication path between the subscriber and the selected destination. The subscriber or the multimedia service network is operable to switch a direct connect session from one-way mode to two-way mode or vice versa, based on subscriber-specified inputs or based on the occurrence of certain predesignated indicia transmitted in a monitored channel.

In further exemplary implementations, destination selection may also involve the use of such predesignated indicia with respect to a monitored subscriber terminal. For example, where a voice channel is monitored, the predesignated indicia may comprise key phrases such as "help" or "fire" and the like, whereupon an appropriate destination may be connected via a direct connection. Such features may preferably be provided as a set of intelligent control options 718 of the service profile 700.

Further, destination selection may also involve interactions with other service options such as scheduling options 712 which include, e.g, time-of-day delivery policies and restrictions 713-1, mode-based options 713-2, and destination-based options 713-3. The destination-based options 713-3 may further be customized with respect to geographic location and type of the destinations.

As pointed out in the foregoing, the delivery mode involves transmission of information (i.e., media) from the subscriber to the authorized destination. A plurality of delivery options 714 are provided for specifying the type of information or medium that is to be delivered. For example, media such as audio 715-1, video 715-2, pictures 715-3 or data 715-4 may be delivered in any combination thereof. Further, the subscriber is provided with the capability to add or drop the media once a session is in place. That is, for example, the subscriber is provided with the option to turn on video or data transmission after engaging in an audio session for a period of time. In addition, such capabilities may be effectuated as part of the intelligent control options 718 also.

Similar to the delivery mode options 714, plurality of capture options 716 are provided for specifying the type of information that is to be captured from an authorized destination. For example, audio 717-1, video 717-2, pictures 717-3 or data 717-4 may be captured either alone or in any combination thereof. Also, these media may be optionally changed, augmented, or modified based on subscriber inputs or by means of applicable intelligent control options 718.

Those skilled in the art should realize upon reference hereto that the direct connect service profile 700 described herein is illustrative only. Accordingly, both the contents and specific implementation of a subscriber profile database may vary depending upon the objectives of a particular application. It should therefore be recognized that the scope of the present invention is not circumscribed by the specifics of a subscriber profile database in any manner.

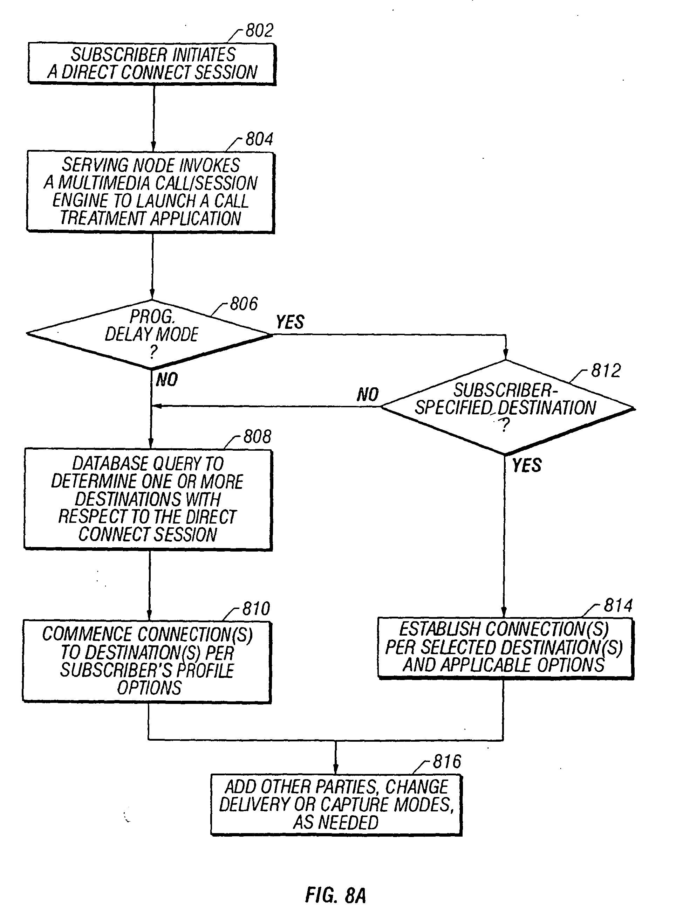

FIG. 8A is a flow chart of the steps involved in an exemplary embodiment of the direct connect method of the present invention. Upon receiving an indication to initiate a direct connect session with respect to a subscriber (step 802), the serving node disposed in the multimedia-capable service network (such as, e.g., the service network arrangement 500 described hereinabove in reference to FIG. 5) invokes a multimedia call/session engine to launch a call treatment application for the subscriber (step 804). In one implementation, the indication to initiate the direct connect session may be generated by effectuating an "off-hook" condition at the subscriber terminal. In another implementation, the indication may be generated by pressing a select key to initiate the session. In a still further implementation, the indication to initiate the direct connect session may be voice-activated by the subscriber. A determination may be made thereafter to ascertain whether the direct connect session requested is to be effectuated in a hot line or warm line (i.e., programmable delay) mode (decision block 806). If the warm line mode is indicated, a further determination is made whether a destination address is specified (decision block 812). If so, a direct connect session to the specified destination is established or commenced in accordance with the applicable service options (step 814).

Where no destination is specified in the warm line mode or where there is no programmable delay in call setup, a database associated with the call treatment application is queried to determine one or more authorized destinations and associated service options in accordance with the subscriber's service profile (step 808). Subsequently, one or more call legs involving a direct connect session are commenced (step 810), preferably based on the applicable service options such as those described in greater detail hereinabove in reference to FIG. 7.

As alluded to in the foregoing, regardless of whether the hot line mode or warm line mode is used in effecting a direct connect session, the characteristics of the session may be customized per subscriber options. Thus, an exemplary direct connect session may be in one-way or two-way mode, delivery or capture mode, or may involve audio only, video only, both audio and video, or data stream transmission. Furthermore, depending on subscriber input and/or the occurrence of certain indicia with respect to a monitored channel, these various modal characteristics may be changed, additional authorized parties may be added, media can be added or dropped, and so on. These processes are combined into a consolidated step 816 of the flow chart depicted in FIG. 8A.

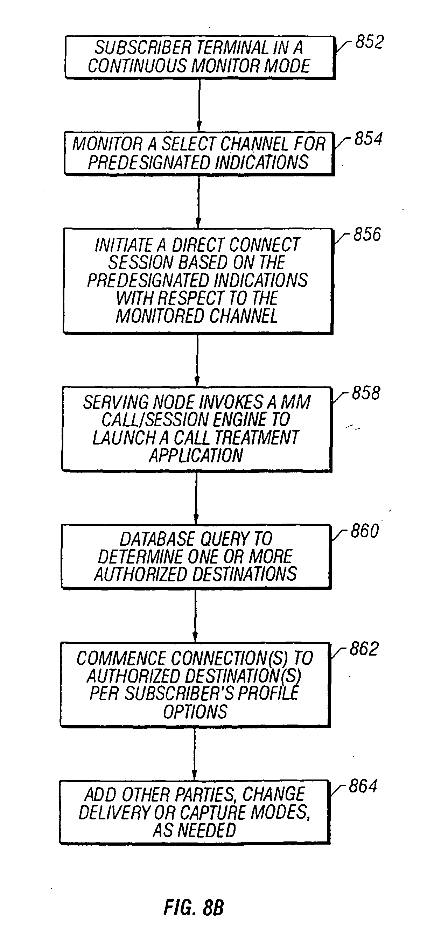

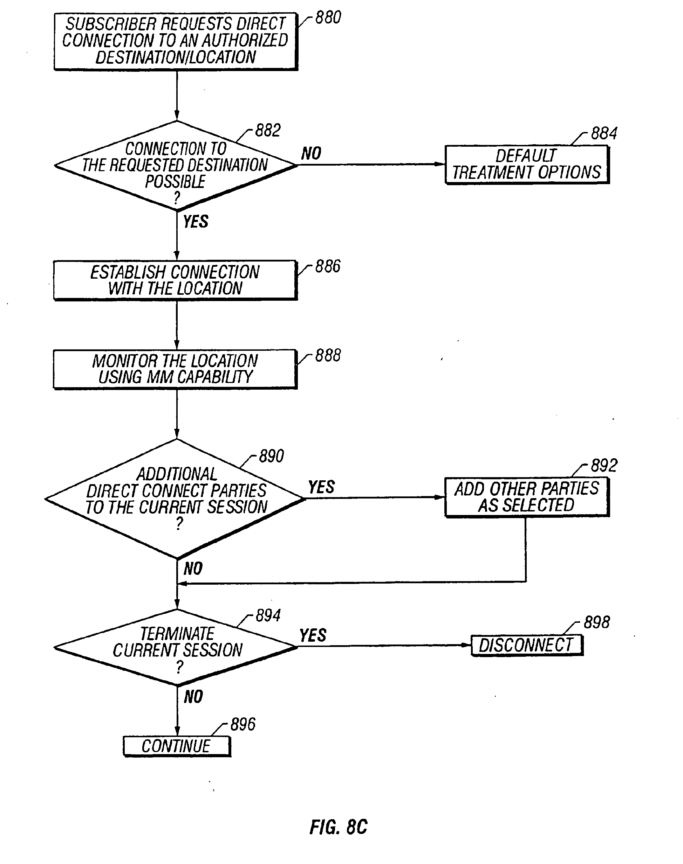

FIGS. 8B and 8C depict flow charts of the steps involved in additional embodiments of the direct connect method of the present invention, wherein some of the exemplary scenarios are described in greater detail. Referring in particular to FIG. 8B, a subscriber terminal is initially in a continuous monitoring mode for a selected period of time (step 852). A select channel associated therewith, e.g., audio, video, etc., is monitored for the occurrence of predesignated indicia (step 854). Based on the predesignated indicia, a direct connect session to one or more authorized destinations is initiated (step 856). As described hereinabove, the serving node invokes a multimedia call engine to launch an applicable call treatment application (858), whereupon a database query determines appropriate destinations based on applicable intelligent control service options of the direct connect service profile associated with the subscriber (step 860). Subsequently, one or more call legs involving a direct connect session are commenced in accordance with the other options that may interact with the selected destinations (step 862). Similar to the consolidated step 816 shown in FIG. 8A, the modal characteristics of the direct connect sessions may be varied or customized as needed (step 864).

FIG. 8C is a flow chart of the steps involved in yet another exemplary embodiment of the direct connect method of the present invention, wherein a subscriber requests a connection to a destination or location which permits emergency connectivity for monitoring purposes (step 880). For example, such destinations may comprise nursing homes, daycare centers, hospitals, etc. If connection to the requested destination is not possible (decision block 882), a default treatment may be accorded (step 884). Otherwise, a direct connect session is established with respect to the requested location (step 886), whereupon the location is monitored using the multimedia capabilities (step 888). A determination may be made thereafter as to whether connections to additional destinations are indicated (decision block 890). If so, the additional destinations as selected (e.g., a police station, fire department, an emergency rescue center, and the like) are added to the current session or commenced as separate sessions (step 892). Upon completion of monitoring the selected location or after concluding the call legs involving with the additional parties, a determination is made to terminate the session (decision block 894). If so, the subscriber disconnects (step 898); otherwise, the direct connect session(s) may continue (step 896).

Although not explicitly depicted in the flow charts of FIGS. 8A through 8C, those skilled in the art should appreciate that during a direct session with a particular destination, parties can be added or deleted on an as-needed basis. Furthermore, whereas the call scenario embodiments depicted therein have been described somewhat independent of one another, it should be recognized that a real-life application may involve a combination of one or more steps from each of the flow charts associated with the exemplary call scenario embodiments in addition to further steps as may be applicable. Thus, for example, it is possible for a direct connect session to be initiated with respect to a subscriber in one of myriad ways and then to "transfer" to a different location or add yet another location. By way of illustration, a subscriber may initiate a direct connect session with an emergency operator, who may connect or transfer the party to a police station, fire department, etc. Upon connecting the subscriber to a requested location, the emergency operator may disconnect from the session.

Various additional options also exist with respect to connecting to a destination by means of the direct connect service of the present invention. One exemplary additional option can be to always connect to a destination (fixed or dynamically selected based on subscriber preference, which destination can be an operator or a third party, or even an interactive voice response (IVR) system) which will prompt or analyze the subscriber's input (e.g., keyed input, spoken input, etc.) to determine the final desired destination. It should be recognized that this feature is quite useful for the elderly and other persons who may need help with dialing or keying in the desired location (i.e., assisted destination selection). Another application of this option is to monitor the party's call/session to trigger a destination selection, wherein certain restrictions may be imposed based on the monitored party (e.g., children, parolees, etc.). Yet another application of assisted destination selection is where language assistance may be provided to the subscriber. A direct connect session is first established to a party that provides language assistance and then a connection to the desired destination is established.

Based upon the foregoing Detailed Description, it should be readily apparent that the present invention advantageously provides an enhanced hot line service using multimedia within the context of a next-generation network. By architecting the service as part of a decoupled application layer with open protocols and APIs, not only can service interoperability with different network elements and platforms be ensured, but service rollout can be streamlined as well for faster delivery. Furthermore, the direct connect service of the present invention provides several advancements and improvements over the conventional schemes. For example, because the connection modes can be customized based on a host of features and options, subscribers are accorded a more enriched experience than the conventional audio-only or single destination schemes. Moreover, information may be gathered on a scheduled basis from select locations/destinations, which information is useful with respect to the monitoring of nursing homes, daycare centers, or one's residence or other real property. Emergency connectivity to public safety agencies can also be advantageously effectuated for multimedia-based monitoring.

Furthermore, straightforward techniques are available for implementing an option to differentiate a regular call from a direct call that can originate from, e.g., a warm line. A list of permissible direct connect destination numbers or addresses can be maintained with respect to a subscriber in his profile and, when a direct connect destination is encountered, the network can automatically detect the request for a direct connect session. Another related service option is the capability to make a direct call as well as a regular call to a destination address that occurs in the subscriber's direct connect list. For instance, a warm line subscriber may be required to dial a feature access code to reach a direct connect destination if the session is to be established using the delayed connection option.

It is believed that the operation and construction of the present invention will be apparent from the foregoing Detailed Description. While the system and method shown and described have been characterized as being preferred, it should be readily understood that various changes and modifications could be made therein without departing from the scope of the present invention as set forth in the following claims.

## Claims

1. A method of establishing a direct connection through a multimedia-capable service network, comprising the steps:
upon receiving an indication to initiate a direct connect session with respect to a subscriber, invoking a multimedia call engine by a serving node to launch a call treatment application for said subscriber;
querying a service profile associated with said subscriber to determine an authorized destination with respect to said direct connect session; and
responsive to said step of querying, commencing said direct connect session to said authorized destination.

2. The method as set forth in claim 1, wherein said direct connect session is commenced in accordance with at least one applicable service option associated with said service profile.

3. The method as set forth in claim 1, wherein said indication to initiate a direct connect session comprises an off-hook condition effectuated with respect to said subscriber's terminal.

4. The method as set forth in claim 1, wherein said indication to initiate a direct connect session is effectuated by pressing a key at said subscriber's terminal.

5. The method as set forth in claim 1, wherein said indication to initiate a direct connect session is effectuated in response to monitoring at least one of an audio channel and a video channel associated with said subscriber's terminal.

6. The method as set forth in claim 1, further comprising the steps:
determining whether said direct connect session is to be commenced with a delay; and
if so, commencing said direct connect session to a destination specified by said subscriber.

7. The method as set forth in claim 6, further comprising the step of selecting a default destination if a destination is not specified by said subscriber when said direct connect session is to be commenced with a delay.

8. The method as set forth in claim 1, wherein said authorized destination comprises a governmental entity.

9. The method as set forth in claim 1, wherein said authorized destination comprises a commercial entity.

10. The method as set forth in claim 1, wherein said authorized destination comprises an individual party.

11. The method as set forth in claim 1, wherein said direct connect session comprises a one-way communication channel between said subscriber and said authorized destination.

12. The method as set forth in claim 11, further comprising the step of activating a two-way communication channel for said direct connect session based on an input provided by said subscriber.

13. The method as set forth in claim 11, further comprising the step of activating a two-way communication channel for said direct connect session based on monitoring for a predesignated indicium transmitted via said one-way communication channel.

14. The method as set forth in claim 11, wherein said one-way communication channel for said direct connect session comprises an audio channel.

15. The method as set forth in claim 11, wherein said one-way communication channel for said direct connect session comprises an video channel.

16. The method as set forth in claim 11, wherein said one-way communication channel for said direct connect session comprises an information channel to deliver select information to said authorized destination.

17. The method as set forth in claim 16, wherein said select information comprises at least one of audio, video and data information.

18. The method as set forth in claim 11, wherein said one-way communication channel for said direct connect session comprises an information channel to capture select information from said authorized destination.

19. The method as set forth in claim 18, wherein said select information comprises at least one of audio, video and data information.

20. A direct connect system for use in a multimedia-capable service network, comprising:
means for invoking a multimedia call engine to launch a call treatment application for a subscriber upon receiving an indication to initiate a direct connect session involving said subscriber;
database means operable to store a service profile associated with said subscriber;
service logic means associated with said call treatment application for ascertaining an authorized destination with respect to said direct connect session by interacting with said database means; and
means for commencing said direct connect session to said authorized destination based on at least one applicable service option associated therewith.

21. The direct connect system as set forth in claim 20, wherein said authorized destination comprises one of a governmental entity, a commercial entity, and an individual party.

22. The direct connect system as set forth in claim 20, wherein said indication to initiate a direct connect session comprises an off-hook condition effectuated with respect to said subscriber's terminal.

23. The direct connect system as set forth in claim 20, wherein said indication to initiate a direct connect session is effectuated by pressing a key at said subscriber's terminal.

24. The direct connect system as set forth in claim 20, wherein said indication to initiate a direct connect session is effectuated in response to monitoring at least one of an audio channel and a video channel associated with said subscriber's terminal.

25. The direct connect system as set forth in claim 20, wherein said direct connect session comprises at least a one-way communication channel between said subscriber and said authorized destination.

26. The direct connect system as set forth in claim 25, wherein said one-way communication channel for said direct connect session comprises an audio channel.

27. The direct connect system as set forth in claim 25, wherein said one-way communication channel for said direct connect session comprises an video channel.

28. The direct connect system as set forth in claim 25, wherein said one-way communication channel for said direct connect session comprises an information channel to deliver select information to said authorized destination.

29. The direct connect system as set forth in claim 28, wherein said select information comprises at least one of audio, video and data information.

30. The direct connect system as set forth in claim 25, wherein said one-way communication channel for said direct connect session comprises an information channel to capture select information from said authorized destination.

31. The direct connect system as set forth in claim 30, wherein said select information comprises at least one of audio, video and data information.

32. A computer-accessible medium operable with a network element disposed in a multimedia-capable next-generation network, said computer-accessible medium carrying a sequence of instructions which, when executed by at least one processing entity associated with said multimedia-capable next-generation network, cause the following steps to be performed:
upon receiving an indication to initiate a direct connect session with respect to a subscriber, invoking a multimedia call engine by a serving node to launch a call treatment application for said subscriber;
querying a service profile associated with said subscriber to determine an authorized destination with respect to said direct connect session; and
responsive to said step of querying, commencing said direct connect session to said authorized destination.

33. The computer-accessible medium as set forth in claim 32, wherein said authorized destination comprises one of a governmental entity, a commercial entity, and an individual party.

34. The computer-accessible medium as set forth in claim 32, wherein said indication to initiate a direct connect session comprises an off-hook condition effectuated with respect to said subscriber's terminal.

35. The computer-accessible medium as set forth in claim 32, wherein said indication to initiate a direct connect session is effectuated by pressing a key at said subscriber's terminal.

36. The computer-accessible medium as set forth in claim 32, wherein said indication to initiate a direct connect session is effectuated in response to monitoring at least one of an audio channel and a video channel associated with said subscriber's terminal.

37. The computer-accessible medium as set forth in claim 32, wherein said direct connect session comprises at least a one-way communication channel between said subscriber and said authorized destination.

38. The computer-accessible medium as set forth in claim 37, wherein said one-way communication channel for said direct connect session comprises an audio channel.

39. The computer-accessible medium as set forth in claim 37, wherein said one-way communication channel for said direct connect session comprises an video channel.

40. The computer-accessible medium as set forth in claim 37, wherein said one-way communication channel for said direct connect session comprises an information channel to deliver select information to said authorized destination.

41. The computer-accessible medium as set forth in claim 40, wherein said select information comprises at least one of audio, video and data information.

42. The computer-accessible medium as set forth in claim 37, wherein said one-way communication channel for said direct connect session comprises an information channel to capture select information from said authorized destination.

43. The computer-accessible medium as set forth in claim 40, wherein said select information comprises at least one of audio, video and data information.

## Patentansprüche

1. Verfahren zum Aufbauen einer Direktverbindung über ein multimediafähiges Dienstenetz, das folgende Schritte umfasst:
auf das Empfangen einer Anzeige hin, eine Direktverbindungssitzung in Bezug auf einen Teilnehmer auszulösen, Aufrufen einer Multimedia-Call-Engine durch einen Knoten mit Servingfunktion, um eine Anrufbehandlungs-Anwendung für den Teilnehmer zu starten;
Abfragen eines Diensteprofils, das dem Teilnehmer zugeordnet ist, um ein berechtigtes Ziel in Bezug auf die Direktverbindungssitzung zu bestimmen; und
in Reaktion auf den Schritt des Abfragens Beginnen der Direktverbindungssitzung zum berechtigten Ziel.

2. Verfahren nach Anspruch 1, wobei die Direktverbindungssitzung gemäß mindestens einer anwendbaren Diensteoption begonnen wird, die dem Diensteprofil zugeordnet ist.

3. Verfahren nach Anspruch 1, wobei die Anzeige, eine Direktverbindungssitzung auszulösen, einen Hörer-abgenommen-Zustand umfasst, der in Bezug auf das Endgerät des Teilnehmers bewirkt wird.

4. Verfahren nach Anspruch 1, wobei die Anzeige, eine Direktverbindungssitzung auszulösen, durch Drücken einer Taste am Endgerät des Teilnehmers bewirkt wird.

5. Verfahren nach Anspruch 1, wobei die Anzeige, eine Direktverbindungssitzung auszulösen, in Reaktion auf Überwachen mindestens eines eines Audiokanals und eines Videokanals bewirkt wird, der dem Endgerät des Teilnehmers zugeordnet ist.

6. Verfahren nach Anspruch 1, das ferner die folgenden Schritte umfasst:
Bestimmen, ob die Direktverbindungssitzung mit einer Verzögerung zu beginnen ist; und
wenn dies der Fall ist, Beginnen der Direktverbindungssitzung zu einem Ziel, das durch den Teilnehmer festgelegt ist.

7. Verfahren nach Anspruch 6, das ferner den Schritt des Auswählens eines Standardziels umfasst, falls kein Ziel durch den Teilnehmer festgelegt ist, wenn die Direktverbindungssitzung mit einer Verzögerung zu beginnen ist.

8. Verfahren nach Anspruch 1, wobei das berechtigte Ziel eine behördliche Stelle umfasst.

9. Verfahren nach Anspruch 1, wobei das berechtigte Ziel eine kommerzielle Stelle umfasst.

10. Verfahren nach Anspruch 1, wobei das berechtigte Ziel eine individuelle Partei umfasst.

11. Verfahren nach Anspruch 1, wobei die Direktverbindungssitzung einen Ein-Wege-Kommunikationskanal zwischen dem Teilnehmer und dem berechtigten Ziel umfasst.

12. Verfahren nach Anspruch 11, das ferner den Schritt des Aktivierens eines Zwei-Wege-Kommunikationskanals für die Direktverbindungssitzung basierend auf einer Eingabe umfasst, die durch den Teilnehmer bereitgestellt wird.

13. Verfahren nach Anspruch 11, das ferner den Schritt des Aktivierens eines Zwei-Wege-Kommunikationskanals für die Direktverbindungssitzung basierend auf Überwachen auf ein vorbezeichnetes Indiz umfasst, das über den Ein-Wege-Kommunikationskanal gesendet wird.

14. Verfahren nach Anspruch 11, wobei der Ein-Wege-Kommunikationskanal für die Direktverbindungssitzung einen Audiokanal umfasst.

15. Verfahren nach Anspruch 11, wobei der Ein-Wege-Kommunikationskanal für die Direktverbindungssitzung einen Videokanal umfasst.

16. Verfahren nach Anspruch 11, wobei der Ein-Wege-Kommunikationskanal für die Direktverbindungssitzung einen Informationskanal umfasst, um Auswahlinformationen zum berechtigten Ziel zu liefern.

17. Verfahren nach Anspruch 16, wobei die Auswahlinformationen mindestens eine von Audio-, Video- und Dateninformationen umfassen.

18. Verfahren nach Anspruch 11, wobei der Ein-Wege-Kommunikationskanal für die Direktverbindungssitzung einen Informationskanal umfasst, um Auswahlinformationen vom berechtigten Ziel zu erfassen.

19. Verfahren nach Anspruch 18, wobei die Auswahlinformationen mindestens eine von Audio-, Video- und Dateninformationen umfassen.

20. Direktverbindungssystem zur Verwendung in einem multimediafähigen Dienstenetz, das Folgendes umfasst:
Mittel zum Aufrufen einer Multimedia-Call-Engine, um eine Anrufbehandlungs-Anwendung für einen Teilnehmer auf Empfangen einer Anzeige hin, eine Direktverbindungssitzung auszulösen, an der der Teilnehmer beteiligt ist, zu starten;
Datenbankmittel, die betreibbar sind, um ein Diensteprofil zu speichern, das dem Teilnehmer zugeordnet ist;
Dienstelogikmittel, die der Anrufbehandlungs-Anwendung zugeordnet sind, zum Ermitteln eines berechtigten Ziels in Bezug auf die Direktverbindungssitzung durch Interagieren mit den Datenbankmitteln und
Mittel zum Beginnen der Direktverbindungssitzung zum berechtigten Ziel basierend auf mindestens einer anwendbaren, ihm zugeordneten Diensteoption.

21. Direktverbindungssystem nach Anspruch 20, wobei das berechtigte Ziel eines einer behördlichen Stelle, einer kommerziellen Stelle und einer individuellen Partei umfasst.

22. Direktverbindungssystem nach Anspruch 20, wobei die Anzeige, eine Direktverbindungssitzung auszulösen, einen Hörer-abgenommen-Zustand umfasst, der in Bezug auf das Endgerät des Teilnehmers bewirkt wird.

23. Direktverbindungssystem nach Anspruch 20, wobei die Anzeige, eine Direktverbindungssitzung auszulösen, durch Drücken einer Taste am Endgerät des Teilnehmers bewirkt wird.

24. Direktverbindungssystem nach Anspruch 20, wobei die Anzeige, eine Direktverbindungssitzung auszulösen, in Reaktion auf Überwachen mindestens eines eines Audiokanals und eines Videokanals bewirkt wird, der dem Endgerät des Teilnehmers zugeordnet ist.

25. Direktverbindungssystem nach Anspruch 20, wobei die Direktverbindungssitzung mindestens einen Ein-Wege-Kommunikationskanal zwischen dem Teilnehmer und dem berechtigten Ziel umfasst.

26. Direktverbindungssystem nach Anspruch 25, wobei der Ein-Wege-Kommunikationskanal für die Direktverbindungssitzung einen Audiokanal umfasst.

27. Direktverbindungssystem nach Anspruch 25, wobei der Ein-Wege-Kommunikationskanal für die Direktverbindungssitzung einen Videokanal umfasst.

28. Direktverbindungssystem nach Anspruch 25, wobei der Ein-Wege-Kommunikationskanal für die Direktverbindungssitzung einen Informationskanal umfasst, um Auswahlinformationen zum berechtigten Ziel zu liefern.

29. Direktverbindungssystem nach Anspruch 28, wobei die Auswahlinformationen mindestens eine von Audio-, Video- und Dateninformationen umfassen.

30. Direktverbindungssystem nach Anspruch 25, wobei der Ein-Wege-Kommunikationskanal für die Direktverbindungssitzung einen Informationskanal umfasst, um Auswahlinformationen vom berechtigten Ziel zu erfassen.

31. Direktverbindungssystem nach Anspruch 30, wobei die Auswahlinformationen mindestens eine von Audio-, Video- und Dateninformationen umfassen.

32. Computerzugreifbares Medium, das mit einem Netzelement betreibbar ist, das in einem multimediafähigen Netz der nächsten Generation angeordnet ist, wobei das computerzugreifbare Medium eine Abfolge von Anweisungen trägt, die, wenn durch mindestens eine Verarbeitungseinheit ausgeführt, die dem multimediafähigen Netz der nächsten Generation zugeordnet ist, veranlasst, dass die folgenden Schritte durchgeführt werden:
auf das Empfangen einer Anzeige hin, eine Direktverbindungssitzung in Bezug auf einen Teilnehmer auszulösen, Aufrufen einer Multimedia-Call-Engine durch einen Knoten mit Servingfunktion, um eine Anrufbehandlungs-Anwendung für den Teilnehmer zu starten;
Abfragen eines Diensteprofils, das dem Teilnehmer zugeordnet ist, um ein berechtigtes Ziel in Bezug auf die Direktverbindungssitzung zu bestimmen; und
in Reaktion auf den Schritt des Abfragens Beginnen der Direktverbindungssitzung zum berechtigten Ziel.

33. Computerzugreifbares Medium nach Anspruch 32, wobei das berechtigte Ziel eines einer behördlichen Stelle, einer kommerziellen Stelle und einer individuellen Partei umfasst.

34. Computerzugreifbares Medium nach Anspruch 32, wobei die Anzeige, eine Direktverbindungssitzung auszulösen, einen Hörer-abgenommen-Zustand umfasst, der in Bezug auf das Endgerät des Teilnehmers bewirkt wird.

35. Computerzugreifbares Medium nach Anspruch 32, wobei die Anzeige, eine Direktverbindungssitzung auszulösen, durch Drücken einer Taste am Endgerät des Teilnehmers bewirkt wird.

36. Computerzugreifbares Medium nach Anspruch 32, wobei die Anzeige, eine Direktverbindungssitzung auszulösen, in Reaktion auf Überwachen mindestens eines eines Audiokanals und eines Videokanals bewirkt wird, der dem Endgerät des Teilnehmers zugeordnet ist.

37. Computerzugreifbares Medium nach Anspruch 32, wobei die Direktverbindungssitzung mindestens einen Ein-Wege-Kommunikationskanal zwischen dem Teilnehmer und dem berechtigten Ziel umfasst.

38. Computerzugreifbares Medium nach Anspruch 37, wobei der Ein-Wege-Kommunikationskanal für die Direktverbindungssitzung einen Audiokanal umfasst.

39. Computerzugreifbares Medium nach Anspruch 37, wobei der Ein-Wege-Kommunikationskanal für die Direktverbindungssitzung einen Videokanal umfasst.

40. Computerzugreifbares Medium nach Anspruch 37, wobei der Ein-Wege-Kommunikationskanal für die Direktverbindungssitzung einen Informationskanal umfasst, um Auswahlinformationen zum berechtigten Ziel zu liefern.

41. Computerzugreifbares Medium nach Anspruch 40, wobei die Auswahlinformationen mindestens eine von Audio-, Video- und Dateninformationen umfassen.

42. Computerzugreifbares Medium nach Anspruch 37, wobei der Ein-Wege-Kommunikationskanal für die Direktverbindungssitzung einen Informationskanal umfasst, um Auswahlinformationen vom berechtigten Ziel zu erfassen.

43. Computerzugreifbares Medium nach Anspruch 40, wobei die Auswahlinformationen mindestens eine von Audio-, Video- und Dateninformationen umfassen.

## Revendications

1. Procédé d'établissement d'une connexion directe à travers un réseau de service orienté multimédia, comprenant les étapes consistant à :
lors de la réception d'une indication pour initier une session de connexion directe par rapport à un abonné, invoquer un moteur d'appel multimédia par un noeud de desserte pour lancer une application de traitement d'appel pour ledit abonné;
interroger un profil de service associé au dit abonné pour déterminer une destination autorisée par rapport à ladite session de connexion directe ; et
en réponse à ladite étape d'interrogation, commencer ladite session de connexion directe vers ladite destination autorisée.

2. Procédé selon la revendication 1, dans lequel ladite session de connexion directe est commencée selon au moins une option de service applicable associée au dit profil de service.

3. Procédé selon la revendication 1, dans lequel ladite indication pour initier une session de connexion directe comprend une condition de décrochage effectuée par rapport au terminal dudit abonné.

4. Procédé selon la revendication 1, dans lequel ladite indication pour initier une session de connexion directe est effectuée en enfonçant une touche au niveau du terminal dudit abonné.

5. Procédé selon la revendication 1, dans lequel ladite indication pour initier une session de connexion directe est effectuée en réponse au contrôle d'au moins un canal audio et un canal vidéo associés au terminal dudit abonné.

6. Procédé selon la revendication 1, comprenant en outre les étapes consistant à :
déterminer si ladite session de connexion directe doit être commencée avec un retard ; et
si oui, commencer ladite session de connexion directe vers une destination précisée par ledit abonné.

7. Procédé selon la revendication 6, comprenant en outre l'étape consistant à sélectionner une destination par défaut si une destination n'est pas précisée par ledit abonné lorsque ladite session de connexion directe doit être commencée avec un retard.

8. Procédé selon la revendication 1, dans lequel ladite destination autorisée comprend une entité gouvernementale.

9. Procédé selon la revendication 1, dans lequel ladite destination autorisée comprend une entité commerciale.

10. Procédé selon la revendication 1, dans lequel ladite destination autorisée comprend une partie individuelle.

11. Procédé selon la revendication 1, dans lequel ladite session de connexion directe comprend un canal de communication unidirectionnel entre ledit abonné et ladite destination autorisée.

12. Procédé selon la revendication 11, comprenant en outre l'étape consistant à activer un canal de communication bidirectionnel pour ladite session de connexion directe en fonction d'une entrée fournie par ledit abonné.

13. Procédé selon la revendication 11, comprenant en outre l'étape consistant à activer un canal de communication bidirectionnel pour ladite session de connexion directe en fonction du contrôle d'un indice prédéterminé transmis par l'intermédiaire dudit canal de communication unidirectionnel.

14. Procédé selon la revendication 11, dans lequel ledit canal de communication unidirectionnel pour ladite session de connexion directe comprend un canal audio.

15. Procédé selon la revendication 11, dans lequel ledit canal de communication unidirectionnel pour ladite session de connexion directe comprend un canal vidéo.

16. Procédé selon la revendication 11, dans lequel ledit canal de communication unidirectionnel pour ladite session de connexion directe comprend un canal d'informations pour fournir des informations sélectionnées à ladite destination autorisée.

17. Procédé selon la revendication 16, dans lequel lesdites informations sélectionnées comprennent au moins une des informations audio, vidéo et de données.

18. Procédé selon la revendication 11, dans lequel ledit canal de communication unidirectionnel pour ladite session de connexion directe comprend un canal d'informations pour capturer des informations sélectionnées provenant de ladite destination autorisée.

19. Procédé selon la revendication 18, dans lequel lesdites informations sélectionnées comprennent au moins une des informations audio, vidéo et de données.

20. Système de connexion directe destiné à être utilisé dans un réseau de service orienté multimédia, comprenant :
des moyens destinés à invoquer un moteur d'appel multimédia pour lancer une application de traitement d'appel pour un abonné lors de la réception d'une indication pour initier une session de connexion directe impliquant ledit abonné ;
des moyens de base de données pouvant être exploités pour stocker un profil de service associé au dit abonné ;
des moyens de logique de service associés à ladite application de traitement d'appel pour identifier une destination autorisée par rapport à ladite session de connexion directe en interagissant avec lesdits moyens de base de données ; et
des moyens destinés à commencer ladite session de connexion directe vers ladite destination autorisée en fonction d'au moins une option de service applicable qui lui est associée.

21. Système de connexion directe selon la revendication 20, dans lequel ladite destination autorisée comprend une parmi une entité gouvernementale, une entité commerciale et une partie individuelle.

22. Système de connexion directe selon la revendication 20, dans lequel ladite indication pour initier une session de connexion directe comprend une condition de décrochage effectuée par rapport au terminal dudit abonné.

23. Système de connexion directe selon la revendication 20, dans lequel ladite indication pour initier une session de connexion directe est effectuée en enfonçant une touche au niveau du terminal dudit abonné.

24. Système de connexion directe selon la revendication 20, dans lequel ladite indication pour initier une session de connexion directe est effectuée en réponse au contrôle d'au moins un canal audio et un canal vidéo associé au terminal dudit abonné.

25. Système de connexion directe selon la revendication 20, dans lequel ladite session de connexion directe comprend au moins un canal de communication unidirectionnel entre ledit abonné et ladite destination autorisée.

26. Système de connexion directe selon la revendication 25, dans lequel ledit canal de communication unidirectionnel pour ladite session de connexion directe comprend un canal audio.

27. Système de connexion directe selon la revendication 25, dans lequel ledit canal de communication unidirectionnel pour ladite session de connexion directe comprend un canal vidéo.

28. Système de connexion directe selon la revendication 25, dans lequel ledit canal de communication unidirectionnel pour ladite session de connexion directe comprend un canal d'informations pour fournir des informations sélectionnées à ladite destination autorisée.

29. Système de connexion directe selon la revendication 28, dans lequel lesdites informations sélectionnées comprennent au moins une des informations audio, vidéo et de données.

30. Système de connexion directe selon la revendication 25, dans lequel ledit canal de communication unidirectionnel pour ladite session de connexion directe comprend un canal d'informations pour capturer des informations sélectionnées provenant de ladite destination autorisée.

31. Système de connexion directe selon la revendication 30, dans lequel lesdites informations sélectionnées comprennent au moins une des informations audio, vidéo et de données.

32. Support accessible par ordinateur pouvant être exploité avec un élément de réseau disposé dans un réseau de nouvelle génération orienté multimédia, ledit support accessible par ordinateur transportant une séquence d'instructions qui, lorsqu'elles sont exécutées par au moins une entité de traitement associée au dit réseau de nouvelle génération orienté multimédia, amènent les étapes suivantes à être réalisées :
lors de la réception d'une indication pour initier une session de connexion directe par rapport à un abonné, invoquer un moteur d'appel multimédia par un noeud de service pour lancer une application de traitement d'appel pour ledit abonné ;
interroger un profil de service associé au dit abonné pour déterminer une destination autorisée par rapport à ladite session de connexion directe ; et
en réponse à ladite étape d'interrogation, commencer ladite session de connexion directe vers ladite destination autorisée.

33. Support accessible par ordinateur selon la revendication 32, dans lequel ladite destination autorisée comprend une parmi une entité gouvernementale, une entité commerciale et une partie individuelle.

34. Support accessible par ordinateur selon la revendication 32, dans lequel ladite indication pour initier une session de connexion directe comprend une condition de décrochage effectuée par rapport au terminal dudit abonné.

35. Support accessible par ordinateur selon la revendication 32, dans lequel ladite indication pour initier une session de connexion directe est effectuée en enfonçant une touche au niveau du terminal dudit abonné.

36. Support accessible par ordinateur selon la revendication 32, dans lequel ladite indication pour initier une session de connexion directe est effectuée en réponse au contrôle d'au moins un parmi un canal audio et un canal vidéo associé au terminal dudit abonné.

37. Support accessible par ordinateur selon la revendication 32, dans lequel ladite session de connexion directe comprend au moins un canal de communication unidirectionnel entre ledit abonné et ladite destination autorisée.

38. Support accessible par ordinateur selon la revendication 37, dans lequel ledit canal de communication unidirectionnel pour ladite session de connexion directe comprend un canal audio.

39. Support accessible par ordinateur selon la revendication 37, dans lequel ledit canal de communication unidirectionnel pour ladite session de connexion directe comprend un canal vidéo.

40. Support accessible par ordinateur selon la revendication 37, dans lequel ledit canal de communication unidirectionnel pour ladite session de connexion directe comprend un canal d'informations pour fournir des informations sélectionnées à ladite destination autorisée.

41. Support accessible par ordinateur selon la revendication 40, dans lequel lesdites informations sélectionnées comprennent au moins une parmi des informations audio, vidéo et de données.

42. Support accessible par ordinateur selon la revendication 37, dans lequel ledit canal de communication unidirectionnel pour ladite session de connexion directe comprend un canal d'informations pour capturer des informations sélectionnées provenant de ladite destination autorisée.

43. Support accessible par ordinateur selon la revendication 40, dans lequel lesdites informations de sélection comprennent au moins une parmi des informations audio, vidéo et de données.
